# EUROPEAN PATENT APPLICATION

(11) **EP 4 806 700 A1**
(43) Date of publication of application: **16.09.2026**
(21) Application number: 26154428.2
(22) Date of filing: 27.01.2026
(51) Int. Cl.: B60K 35/22, B60K 35/28, B60K 35/29, B60K 35/81, G06T 1/00, G06V 20/56

(54) **LANE DISPLAY DEVICE**

(30) Priority: 11.03.2025 JP 2025038321
(71) Applicant: Toyota Jidosha Kabushiki Kaisha, Toyota-shi, Aichi-ken 471-8571 (JP)
(72) Inventor: MINAMI, Takayuki, Chuo-Ku, 103-0022 (JP)
(74) Representative: D Young & Co LLP

(57) **Abstract**

The lane display device includes a curve information acquisition unit that acquires curve information around an own vehicle, a display control unit that displays a curved lane image corresponding to the shape of a curved lane around the own vehicle on a display, and a vehicle speed acquisition unit that acquires a vehicle speed of the own vehicle. The display control unit reduces a degree of curvature of the curved lane image displayed on the display when the vehicle speed is low compared to when the vehicle speed is high.

## Description

### CROSS-REFERENCE TO RELATED APPLICATIONS

This application is based upon and claims the benefit of priority from Japanese Patent Application No. 2025-038321, filed on March 11, 2025, the entire contents of which are incorporated herein by reference.

### TECHNICAL FIELD

The present disclosure relates to a lane display device.

### BACKGROUND

A device mounted on a vehicle that displays the situation surrounding the vehicle is known. Such a device is described, for example, in Japanese Unexamined Patent Publication No. 2013-170875. The device described in Japanese Unexamined Patent Publication No. 2013-170875 displays, on a display, lanes and structures ahead of the vehicle based on map information. Similar configurations are also described in Japanese Unexamined Patent Publication No. 2023-164171 and Japanese Unexamined Patent Publication No. H10-143794.

### SUMMARY

For example, in a device that displays the situation surrounding a vehicle, when the lane ahead of the vehicle is curved, an image of a curved lane corresponding to the degree of curvature of the curve is displayed on the display. However, even if the lane shape corresponding to the actual degree of curvature of the curve is displayed on the display, depending on the vehicle's speed, the driver may experience a sense of discomfort when viewing the display due to a discrepancy between the actual lane's curve shape (degree of curvature) and the lane's curve shape displayed on the display.

Therefore, the present disclosure provides a lane display device capable of displaying a curved lane image while suppressing the sense of discomfort perceived by the driver.

A lane display device according to one aspect of the present disclosure is [1] a lane display device including: a curve information acquisition unit configured to acquire curve information including a shape of a curved lane around an own vehicle; a display control unit configured to, based on the acquired curve information, display a curved lane image corresponding to the shape of the curved lane around the own vehicle on a display; and a vehicle speed acquisition unit configured to acquire a vehicle speed of the own vehicle, wherein the display control unit is configured to reduce a degree of curvature of the curved lane image displayed on the display when the vehicle speed is low compared to when the vehicle speed is high.

For example, a driver of the own vehicle tends to look at the road conditions closer to the own vehicle when the vehicle speed is low compared to when the vehicle speed is high. Additionally, even when looking at the same curved lane, the driver tends to perceive the degree of curvature as greater when looking far ahead and as smaller when looking closer. In other words, since the position the driver looks at varies depending on the vehicle speed, the driver's perception of the degree of curvature of the same curved lane differs depending on the vehicle speed. Therefore, the lane display device adjusts the degree of curvature of the curved lane image displayed on the display based on the vehicle speed. Specifically, the lane display device reduces the degree of curvature of the curved lane image displayed on the display when the vehicle speed is low compared to when the vehicle speed is high. This allows the lane display device to display the curved lane image in accordance with the driver's perception of the degree of curvature based on the vehicle speed. Thus, the lane display device can display the curved lane image while suppressing the sense of discomfort perceived by the driver.

The lane display device described above may be configured as [2] the lane display device as described in [1] in which the display control unit is configured to cause a curvature of a curve of the curved lane image displayed on the display to be proportional to the vehicle speed, and reduce the curvature of the curve of the curved lane image as the vehicle speed becomes lower.

In this manner, the lane display device causes the curvature of the curve of the curved lane image displayed on the display to be proportional to the vehicle speed. This allows the lane display device to display the curved lane image in a manner that more closely aligns with the driver's perception, even when the driver's perception of the degree of curvature varies depending on the vehicle speed.

The lane display device described above may be configured as [3] the lane display device as described in [1] or [2] in which the display control unit is configured to: generate a first reference curve image based on a curvature of the curved lane around the own vehicle based on the acquired curve information, extract an image corresponding to a predetermined first angular range along the curve from the generated first reference curve image, enlarge the extracted first reference curve image to a predetermined display size, generate the curved lane image based on a curvature of the curve of the enlarged first reference curve image, and display the generated curved lane image on the display, wherein the display control unit is configured to reduce the first angular range when the vehicle speed is low compared to when the vehicle speed is high.

In this case, the lane display device can obtain the curvature of the curve of the curved lane image to be displayed by extracting a portion of the first reference curve image and enlarging the extracted first reference curve image. At this time, the display control unit reduces the first angular range for extracting the image when the vehicle speed of the own vehicle is low compared to when the vehicle speed is high. By reducing the first angular range, the length of the curve of the extracted first reference curve image becomes shorter. By enlarging the extracted first reference curve image to the predetermined display size in this manner, a first reference curve image with a smaller curvature is obtained as the first angular range becomes smaller. By using the curvature of the first reference curve image obtained in this manner, a curved lane image with an increasingly smaller degree of curvature is obtained as the first angular range becomes smaller (i.e., as the vehicle speed becomes lower). In other words, the lane display device can reduce the degree of curvature of the curved lane image displayed on the display when the vehicle speed is low compared to when the vehicle speed is high by adjusting the first angular range based on the vehicle speed as described above. Thus, the lane display device can generate a curved lane image capable of suppressing the sense of discomfort perceived by the driver by using the method of enlarging the image extracted for the first angular range based on the vehicle speed.

The lane display device described above may be configured as [4] the lane display device as described in [1] or [2] in which the display control unit is configured to acquire a first reference curvature radius based on a curvature of the curved lane around the own vehicle based on the acquired curve information, adjust the first reference curvature radius to be longer when the vehicle speed is low compared to when the vehicle speed is high, generate the curved lane image based on the adjusted first reference curvature radius, and display the generated curved lane image on the display.

In this case, the lane display device can obtain the curvature radius of the curve of the curved lane image to be displayed by acquiring a first reference curvature radius based on the curvature of the curved lane around the own vehicle and adjusting the first reference curvature radius based on the vehicle speed. At this time, the display control unit makes the first reference curvature radius longer when the vehicle speed of the own vehicle is low compared to when the vehicle speed is high. A curved lane image with a smaller degree of curvature is obtained as the first reference curvature radius becomes longer (i.e., as the vehicle speed becomes lower). In other words, the lane display device can reduce the degree of curvature of the curved lane image displayed on the display when the vehicle speed is low compared to when the vehicle speed is high by adjusting the first reference curvature radius based on the vehicle speed as described above. Thus, the lane display device can generate a curved lane image capable of suppressing the sense of discomfort perceived by the driver by using the method of adjusting the curvature radius based on the vehicle speed.

The lane display device described above may be configured as [5] the lane display device as described in any one of [1] to [4], further including an eye height acquisition unit configured to acquire an eye height of a driver of the own vehicle, in which the display control unit reduces the degree of curvature of the curved lane image displayed on the display when the driver's eye height is low compared to when the eye height is high.

For example, a driver of the own vehicle tends to look at the road conditions closer to the own vehicle when the eye height is low compared to when the eye height is high. Additionally, even when looking at the same curved lane, the driver tends to perceive the degree of curvature as greater when looking far ahead and as smaller when looking closer. In other words, since the position the driver looks at varies depending on the eye height, the driver's perception of the degree of curvature of the same curved lane differs depending on the eye height. Therefore, the lane display device adjusts the degree of curvature of the curved lane image displayed on the display based on the eye height. Specifically, the lane display device reduces the degree of curvature of the curved lane image displayed on the display when the driver's eye height of the own vehicle is low compared to when the eye height is high. This allows the lane display device to display the curved lane image in accordance with the driver's perception of the degree of curvature based on the eye height. Thus, the lane display device can display the curved lane image while suppressing the sense of discomfort perceived by the driver.

The lane display device described above may be configured as [6] the lane display device as described in [5] in which the display control unit is configured to cause a curvature of the curve of the curved lane image displayed on the display to be proportional to the driver's eye height, and reduce the curvature of the curve of the curved lane image as the eye height becomes lower.

In this manner, the lane display device causes the curvature of the curve of the curved lane image displayed on the display to be proportional to the driver's eye height. This allows the lane display device to display the curved lane image in a manner that more closely aligns with the driver's perception, even when the driver's perception of the degree of curvature varies depending on the eye height.

The lane display device described above may be configured as [7] the lane display device as described in [5] or [6] in which the display control unit is configured to generate a second reference curve image based on a curvature of the curved lane around the own vehicle based on the acquired curve information, extract an image corresponding to a predetermined second angular range along the curve from the generated second reference curve image, enlarge the extracted second reference curve image to a predetermined display size, generate the curved lane image based on a curvature of the curve of the enlarged second reference curve image, and display the generated curved lane image on the display, wherein the display control unit is configured to reduce the second angular range when the driver's eye height is low compared to when the eye height is high.

In this case, the lane display device can obtain the curvature of the curve of the curved lane image to be displayed by extracting a portion of the second reference curve image and enlarging the extracted second reference curve image. At this time, the display control unit reduces the second angular range for extracting the image when the driver's eye height is low compared to when the eye height is high. By reducing the second angular range, the length of the curve of the extracted second reference curve image becomes shorter. By enlarging the extracted second reference curve image to the predetermined display size, a second reference curve image with a smaller curvature is obtained as the second angular range becomes smaller. By using the curvature of the second reference curve image obtained in this manner, a curved lane image with a smaller degree of curvature is obtained as the second angular range becomes smaller (i.e., as the vehicle speed becomes lower). In other words, the lane display device can reduce the degree of curvature of the curved lane image displayed on the display when the eye height is low compared to when the eye height is high by adjusting the second angular range based on the driver's eye height as described above. Thus, the lane display device can generate a curved lane image capable of suppressing the sense of discomfort perceived by the driver by using the method of enlarging the image extracted for the second angular range based on the eye height.

The lane display device described above may be configured as [8] the lane display device as described in [5] or [6] in which the display control unit is configured to acquire a second reference curvature radius based on a curvature of the curved lane around the own vehicle based on the acquired curve information, adjust the second reference curvature radius to be longer when the driver's eye height is low compared to when the eye height is high, generate the curved lane image based on the adjusted second reference curvature radius, and display the generated curved lane image on the display.

In this case, the lane display device can obtain the curvature radius of the curve of the curved lane image to be displayed by acquiring a second reference curvature radius based on the curvature of the curved lane around the own vehicle and adjusting the second reference curvature radius based on the driver's eye height. At this time, the display control unit makes the second reference curvature radius longer when the driver's eye height of the own vehicle is low compared to when the eye height is high. A curved lane image with a smaller degree of curvature is obtained as the second reference curvature radius becomes longer (i.e., as the eye height becomes lower). In other words, the lane display device can reduce the degree of curvature of the curved lane image displayed on the display when the eye height is low compared to when the eye height is high by adjusting the second reference curvature radius based on the driver's eye height as described above. Thus, the lane display device can generate a curved lane image capable of suppressing the sense of discomfort perceived by the driver by using the method of adjusting the curvature radius based on the driver's eye height.

According to one aspect of the present disclosure, it is possible to display a curved lane image while suppressing the sense of discomfort perceived by the driver.

### BRIEF DESCRIPTION OF DRAWINGS

FIG. 1 is a block diagram illustrating an example of a lane display device according to an embodiment.
FIG. 2 is a diagram illustrating an example of a curved lane image displayed on a display.
FIG. 3A is a side view for explaining differences in a driver's visible area of road conditions due to vehicle speed. FIG. 3B is a top view for explaining differences in a driver's visible area of road conditions due to vehicle speed.
FIG. 4A is a diagram for explaining the generation of a first reference curve image based on the curvature of a curved lane ahead of the own vehicle. FIG. 4B is a diagram for explaining the generation of a first enlarged reference curve image by enlarging a first extracted reference curve image extracted from the first reference curve image. FIG. 5 is a diagram for explaining the adjustment of a curvature radius of a curved lane image to generate a curved lane image corresponding to vehicle speed.
FIG. 6A is a side view for explaining differences in a driver's visible area of road conditions due to the driver's eye height. FIG. 6B is a top view for explaining differences in a driver's visible area of road conditions due to the driver's eye height.
FIG. 7A is a diagram for explaining the generation of a second reference curve image based on the curvature of a curved lane ahead of the own vehicle. FIG. 7B is a diagram for explaining the generation of a second enlarged reference curve image by enlarging a second extracted reference curve image extracted from the second reference curve image.
FIG. 8 is a side view for explaining the relationship between a reference eye height in a reference vehicle and the eye height of a driver of the own vehicle.
FIG. 9 is a diagram for explaining the adjustment of a curvature radius of a curved lane image to generate a curved lane image corresponding to the driver's eye height.

### DETAILED DESCRIPTION

Hereinafter, exemplary embodiments will be described with reference to the drawings. In the drawings, identical or equivalent elements are denoted by the same reference numerals, and redundant descriptions are omitted.

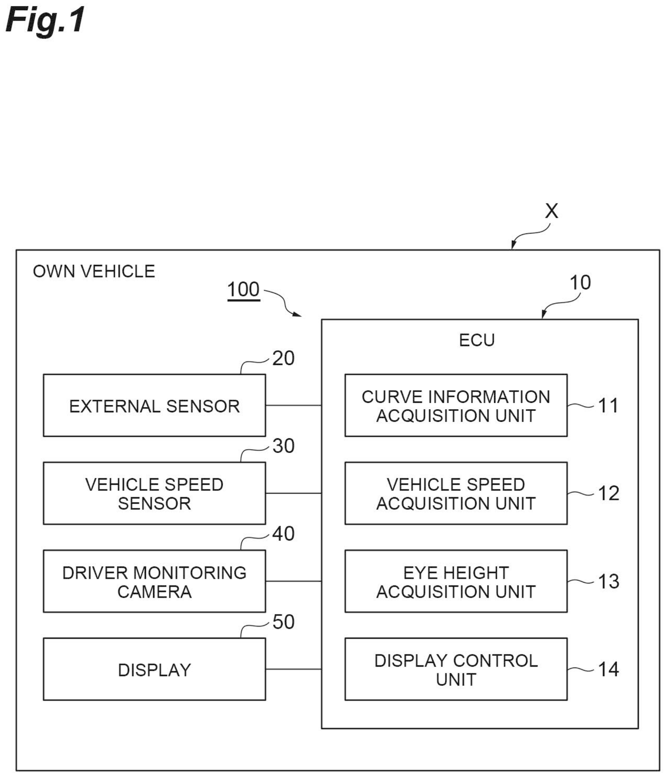

As shown in FIG. 1, a lane display device 100 is mounted on an own vehicle X. The lane display device 100 displays lane images around the own vehicle X on a display 50. In the present embodiment, the lane display device 100 displays, on the display 50, lane images corresponding to lanes ahead of the own vehicle X as the surroundings of the own vehicle X. However, the lane display device 100 may display, on the display 50, lane images corresponding to lanes in directions other than ahead of the own vehicle X as the surroundings of the own vehicle X.

The lane images displayed by the lane display device 100 include lane images corresponding to a traveling lane in which the own vehicle X travels. Additionally, the lane images displayed by the lane display device 100 may include lane images corresponding to adjacent lanes adjacent to the traveling lane of the own vehicle X in addition to the traveling lane of the own vehicle X. The lane images displayed by an ECU 10 include linear lane images corresponding to the shape of linear lanes and curved lane images that curve in accordance with the shape of curved lanes. Hereinafter, a case will be described in which the lane display device 100 displays, on the display 50, a curved lane image corresponding to the shape of a curved lane ahead of the own vehicle X.

The lane display device 100 includes an ECU [Electronic Control Unit] 10 that comprehensively manages the device. The ECU 10 is an electronic control unit having a CPU [Central Processing Unit] and a storage unit. The storage unit includes, for example, ROM [Read Only Memory], RAM [Random Access Memory], EEPROM [Electrically Erasable Programmable Read-Only Memory], and the like. The ECU 10 realizes various functions by, for example, executing programs stored in the storage unit with the CPU. The ECU 10 may be composed of a plurality of electronic control units.

An external sensor 20, a vehicle speed sensor 30, a driver monitoring camera 40, and the display 50 are connected to the ECU 10.

The external sensor 20 is an in-vehicle sensor that detects the external environment of the own vehicle X. The external sensor 20 includes at least a camera or a radar sensor. The camera is an imaging device that captures the external environment of the own vehicle X. The camera is provided, for example, on the back side of the windshield of the own vehicle X and captures images ahead of the vehicle. The camera transmits imaging information regarding the external environment of the own vehicle X to the ECU 10. The camera may be a monocular camera or a stereo camera. A plurality of cameras may be provided, and the cameras may capture images in directions other than ahead, such as the left side and the right side of the own vehicle X.

The radar sensor is a detection device that detects objects around the own vehicle X using radio waves (e.g., millimeter waves) or light. The radar sensor includes LIDAR [Light Detection and Ranging]. LIDAR detects targets by transmitting light around the own vehicle X and receiving light reflected by objects. The radar sensor transmits information regarding the detected external environment of the own vehicle X to the ECU 10.

The vehicle speed sensor 30 is a detector that detects the vehicle speed of the own vehicle X. The vehicle speed sensor 30 is provided, for example, on a wheel of the own vehicle X or a drive shaft that rotates integrally with the wheel, and detects the rotational speed of the wheel. The vehicle speed sensor 30 transmits vehicle speed information of the own vehicle X to the ECU 10.

The driver monitoring camera 40 is an imaging device that captures images of a driver seated in the driver's seat of the own vehicle X. The driver monitoring camera 40 is provided in the cabin of the own vehicle X. The driver monitoring camera 40 is installed so as to be capable of capturing images of the face of the driver seated in the driver's seat. The driver monitoring camera 40 transmits captured image information (face images) to the ECU 10.

The display 50 is a display device that presents information visually to the driver of the own vehicle X. The display 50 is provided in the cabin of the own vehicle X. The display 50 may be a center display, an MID [Multi Information Display], or an HUD [Head Up Display]. The type of the display 50 is not limited as long as it can present information visually. The display 50 displays various types of information in accordance with control signals from the ECU 10.

Functionally, the ECU 10 includes a curve information acquisition unit 11, a vehicle speed acquisition unit 12, an eye height acquisition unit 13, and a display control unit 14.

The curve information acquisition unit 11 acquires curve information including the shape of a curved lane around the own vehicle X (in the present embodiment, ahead of the own vehicle X). The curve information includes the degree of curvature of the curve as the shape of the curved lane. The degree of curvature of the curve can be represented by the curvature or the curvature radius of the curve of the curved lane.

The curve information acquisition unit 11 can acquire curve information of the curved lane ahead of the own vehicle X based on the detection results of the external sensor 20. For example, when a camera is provided as the external sensor 20, the curve information acquisition unit 11 can recognize white lines or the like using well-known image processing techniques on the images captured by the camera to acquire the curve information of the curved lane. Similarly, when LIDAR is provided as the external sensor 20, the curve information acquisition unit 11 can acquire the curve information of the curved lane from the detection results of the LIDAR based on, for example, the difference in light reflectivity between white lines and the road surface.

Note that the curve information acquisition unit 11 may acquire the curve information of the curved lane ahead of the own vehicle X based on the traveling position of the own vehicle X and map information including information about lane shapes. The method for acquiring the curve information by the curve information acquisition unit 11 is not limited.

The vehicle speed acquisition unit 12 acquires the vehicle speed of the own vehicle X. The vehicle speed acquisition unit 12 can acquire the vehicle speed based on, for example, the detection results of the vehicle speed sensor 30. The method for acquiring the vehicle speed by the vehicle speed acquisition unit 12 is not limited.

The eye height acquisition unit 13 acquires the eye height of the driver of the own vehicle X. This eye height is the height from the road surface on which the own vehicle X travels to the driver's eyes. The eye height varies depending on the type of the own vehicle X, the size (vehicle height) of the own vehicle X, and the like. Therefore, the eye height for a standard-height driver riding in the vehicle is predetermined for each vehicle. For example, a higher eye height is preset for each vehicle as the size of the vehicle increases or the vehicle height becomes higher. The eye height acquisition unit 13 can acquire the eye height predetermined for the own vehicle X.

Additionally, the eye height also varies depending on the height of the driver actually riding in the own vehicle X, in addition to the type of the own vehicle X and the like. Therefore, the eye height acquisition unit 13 may detect the eye position of the driver actually riding in the own vehicle X and acquire the eye height based on the detected eye position. In this case, the eye height acquisition unit 13 detects the eye position using, for example, well-known image processing techniques on the face image of the driver captured by the driver monitoring camera 40. Then, the eye height acquisition unit 13 may acquire the eye height based on the detected eye position. At this time, the eye height acquisition unit 13 may acquire the eye height position based on the detected eye position and size information of the own vehicle X (e.g., vehicle height, seat surface height of the driver's seat, etc.). In this case, the eye height acquisition unit 13 can acquire the eye height of the driver actually riding in the own vehicle X with higher accuracy.

The display control unit 14 displays, on the display 50, lane images corresponding to the lanes ahead of the own vehicle X. When the lane ahead of the own vehicle X is a curved lane, the display control unit 14 displays, on the display 50, a curved lane image corresponding to the shape of the curved lane ahead based on the curve information acquired by the curve information acquisition unit 11. For example, the depth of the lane image displayed on the display 50 is fixed. In this case, the display control unit 14 displays the lane shape up to a predetermined distance ahead from the own vehicle X.

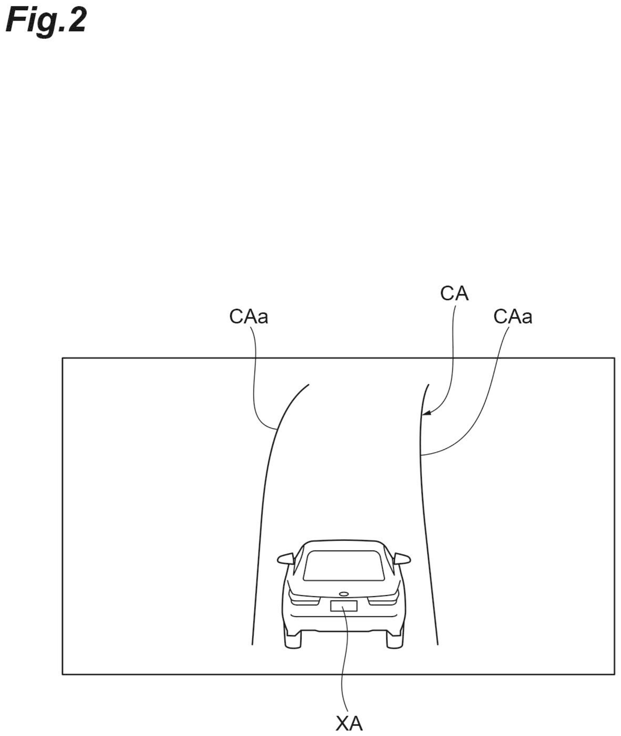

For example, when displaying a curved lane image on the display 50, as shown in FIG. 2, the display control unit 14 displays an own vehicle icon XA corresponding to the own vehicle X and a curved lane image CA corresponding to the curved lane ahead of the own vehicle X. The curved lane image CA may be composed of, for example, as shown in FIG. 2, two boundary lines CAa that demarcate the curved lane from other areas. Alternatively, the curved lane image CA may be indicated by color-coding the curved lane and other areas.

In FIG. 2, the curved lane image CA corresponding to the curved lane ahead of the own vehicle X is displayed. When the lane ahead of the own vehicle X is linear, the display control unit 14 displays a linear lane image on the display 50. Additionally, the display control unit 14 may display, on the display 50, other vehicle icons or the like corresponding to vehicles or the like around the own vehicle X in addition to lane images such as the curved lane image CA.

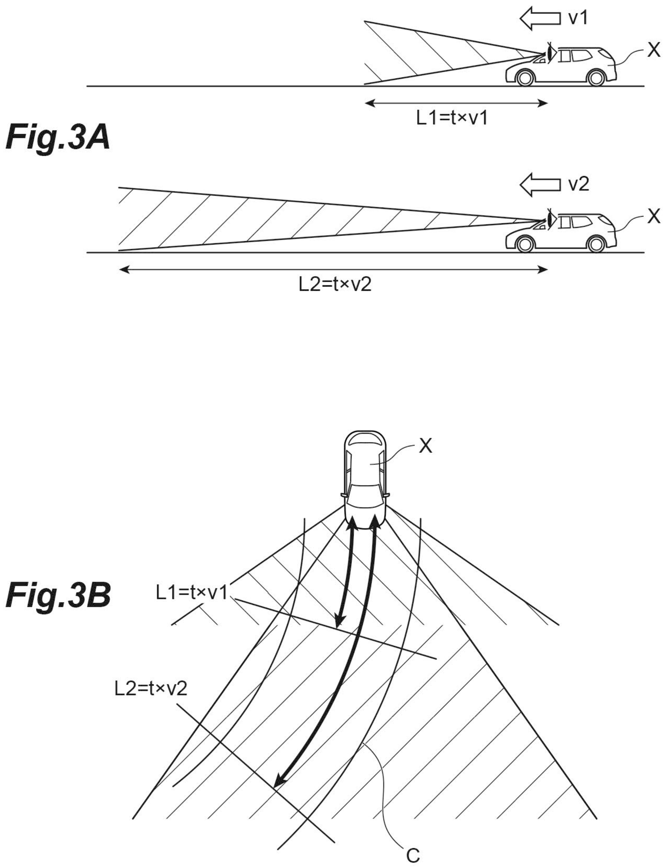

Generally, when driving a vehicle, a person drives while looking at the road conditions a certain time ahead. In other words, the driver tends to look at the road conditions closer to the own vehicle when the vehicle speed is low compared to when the vehicle speed is high. For example, as shown in the upper part of FIG. 3A, when the vehicle speed of the own vehicle X is v1, the driver of the own vehicle X drives while looking at the road conditions t seconds ahead (road conditions up to t seconds ahead). In this case, the driver is looking at the situation at a distance L1 [m] (t [s] × vehicle speed v1 [m/s]) ahead. For example, as shown in the lower part of FIG. 3B, when the vehicle speed of the own vehicle X is v2, which is faster than v1, the driver of the own vehicle X drives while looking at the road conditions t seconds ahead (road conditions up to t seconds ahead). In this case, the driver is looking at the situation at a distance L2 [m] (t [s] × vehicle speed v2 [m/s]) ahead. In other words, when the vehicle speed is v1, the driver of the own vehicle X is looking closer to the own vehicle X compared to when the vehicle speed is v2, which is faster than v1.

Additionally, even when looking at the same curved lane, the driver tends to perceive the degree of curvature as greater when looking far ahead and as smaller when looking closer. In other words, since the position the driver looks at varies depending on the vehicle speed, the driver's perception of the degree of curvature of the same curved lane differs depending on the vehicle speed. For example, as shown in FIG. 3A, the own vehicle X travels on a curved lane C as shown in FIG. 3B. When the vehicle speed is v1, the driver of the own vehicle X is looking at the situation at a distance L1 closer to the own vehicle X, and thus perceives the degree of curvature of the curved lane C as smaller. On the other hand, when the vehicle speed is v2, the driver of the own vehicle X is looking at the situation at a distance L2 farther from the own vehicle X, and thus perceives the degree of curvature of the curved lane C as greater than when the vehicle speed is v1.

Therefore, when the display control unit 14 displays a curved lane image based on the curve information acquired by the curve information acquisition unit 11, it displays the curved lane image while considering the difference in the driver's perception of the degree of curvature of the curved lane based on the vehicle speed of the own vehicle X. Here, the display control unit 14 reduces the degree of curvature of the curved lane image displayed on the display 50 when the vehicle speed of the own vehicle X acquired by the vehicle speed acquisition unit 12 is low compared to when the vehicle speed is high. Additionally, the display control unit 14 causes the curvature of the curve of the curved lane image displayed on the display 50 to be proportional to the vehicle speed, and reduces the curvature of the curve of the curved lane image as the vehicle speed becomes lower.

For example, the display control unit 14 generates a reference curved lane image based on the curve information acquired by the curve information acquisition unit 11. Then, the display control unit 14 may adjust the degree of curvature of the curve of the generated curved lane image based on the vehicle speed of the own vehicle X. Here, the display control unit 14 adjusts the reference curved lane image so that the degree of curvature becomes smaller when the vehicle speed of the own vehicle X is low compared to when the vehicle speed is high.

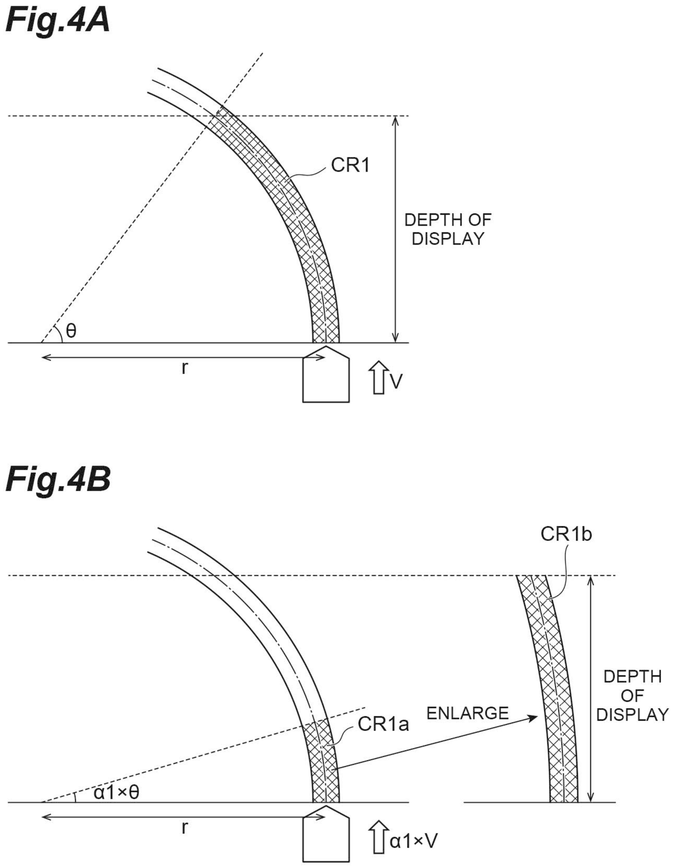

Here, an example of a method for generating a curved lane image based on vehicle speed performed by the display control unit 14 will be described. First, a first generation method for a curved lane image based on vehicle speed will be described. As shown in FIG. 4A, the display control unit 14 generates a first reference curve image CR1 based on the curvature of the curved lane ahead of the own vehicle X based on the curve information acquired by the curve information acquisition unit 11. The display control unit 14 increases the curvature of the first reference curve image CR1 as the curvature of the curved lane included in the curve information is greater. For example, the display control unit 14 generates the first reference curve image CR1 corresponding to the depth of the display of the curved lane image on the display 50.

For example, the display control unit 14 generates, as the first reference curve image CR1, a curved lane image to be displayed on the display 50 when the own vehicle X is traveling at a reference speed V [m/s] based on the curvature of the curved lane included in the curve information. Here, the curvature radius of the first reference curve image CR1 is denoted as r [m]. However, the method for generating the first reference curve image CR1 is not limited as long as it is generated based on the curvature of the curved lane included in the curve information.

Next, as shown in FIG. 4B, the display control unit 14 extracts an image corresponding to a predetermined first angular range along the curve from the generated first reference curve image CR1. The image extracted from the first reference curve image CR1 for the predetermined first angular range is referred to as a first extracted reference curve image CR1a. The display control unit 14 reduces the first angular range when the vehicle speed of the own vehicle X acquired by the vehicle speed acquisition unit 12 is low compared to when the vehicle speed is high.

For example, as shown in FIG. 4A, the display control unit 14 may determine the first angular range based on the angular range θ of the first reference curve image CR1 and the vehicle speed of the own vehicle X when the first reference curve image CR1 is created to correspond to the depth of the display on the display 50. Here, for example, as shown in FIG. 4B, the vehicle speed of the own vehicle X is denoted as α1 × V [m/s]. Note that α1 is less than 1. In other words, here, as an example, a case is described in which the vehicle speed of the own vehicle X is lower than the reference speed V [m/s] used when generating the first reference curve image CR1 shown in FIG. 4A. When the first reference curve image CR1 is generated for the depth of the display on the display 50, the angular range along the curve is denoted as angle θ. In this case, as an example, the display control unit 14 may set the first angular range for extracting the first extracted reference curve image CR1a from the first reference curve image CR1 to α1 × θ. In other words, as the vehicle speed of the own vehicle X becomes lower, the first angular range becomes smaller, and the length of the extracted first extracted reference curve image CR1a also becomes shorter.

Next, the display control unit 14 enlarges the first extracted reference curve image CR1a extracted from the first reference curve image CR1 to a predetermined display size. Here, the display control unit 14 enlarges the first extracted reference curve image CR1a until the depth (vertical size) of the first extracted reference curve image CR1a reaches the size of the depth of the display on the display 50. Additionally, when enlarging the first extracted reference curve image CR1a, the display control unit 14 enlarges it while maintaining the aspect ratio of the image. The image obtained by enlarging the first extracted reference curve image CR1a to the predetermined display size is referred to as a first enlarged reference curve image CR1b. In other words, as the magnification factor of the first extracted reference curve image CR1a increases, the curvature radius of the first enlarged reference curve image CR1b becomes larger. In other words, as the vehicle speed of the own vehicle X becomes lower, the first angular range extracted as the first extracted reference curve image CR1a becomes smaller, and the curvature radius of the first enlarged reference curve image CR1b obtained by enlarging the extracted first extracted reference curve image CR1a becomes larger.

Next, the display control unit 14 generates a curved lane image corresponding to the vehicle speed of the own vehicle X based on the curvature (or curvature radius) of the curve of the first enlarged reference curve image CR1b obtained by enlarging the first extracted reference curve image CR1a. The display control unit 14 displays the generated curved lane image on the display 50.

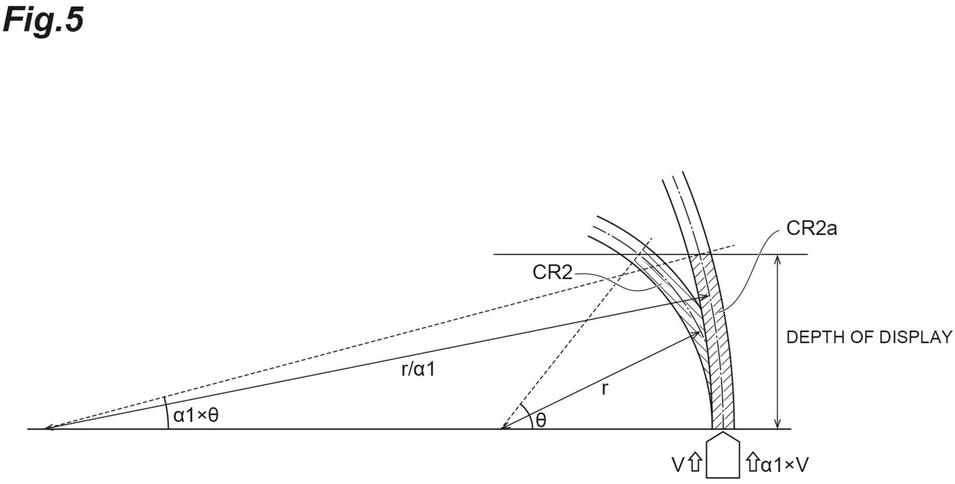

Next, a second generation method for a curved lane image based on vehicle speed will be described. As shown in FIG. 5, the display control unit 14 acquires a first reference curvature radius r [m] based on the curvature of the curved lane ahead of the own vehicle X based on the curve information acquired by the curve information acquisition unit 11. The display control unit 14 reduces the first reference curvature radius r as the curvature of the curved lane included in the curve information is greater. For example, the display control unit 14 may acquire, as the first reference curvature radius r, the curvature radius of a curved lane image CR2 to be displayed on the display 50 when the own vehicle X is traveling at a reference speed V [m/s] based on the curvature of the curved lane included in the curve information. In other words, the curved lane image CR2 is an image obtained based on the curve information acquired by the curve information acquisition unit 11 and is an image obtained based on the curvature of the curved lane ahead of the own vehicle X. The method for acquiring the first reference curvature radius r is not limited as long as it is generated based on the curvature of the curved lane included in the curve information.

The display control unit 14 adjusts the first reference curvature radius r to be longer when the vehicle speed of the own vehicle X acquired by the vehicle speed acquisition unit 12 is low compared to when the vehicle speed is high. For example, as shown in FIG. 5, the vehicle speed of the own vehicle X is denoted as α1 × V [m/s]. Note that α1 is less than 1. In other words, here, as an example, a case is described in which the vehicle speed of the own vehicle X is lower than the reference speed V [m/s] used when acquiring the first reference curvature radius r. In this case, as an example, the display control unit 14 may use r/α1 [m] as the adjusted first reference curvature radius. In other words, as the vehicle speed of the own vehicle X becomes lower, α1 becomes smaller, and the adjusted first reference curvature radius r/α1 [m] becomes longer. As the adjusted first reference curvature radius r/α1 [m] becomes longer, the curvature of the curved lane image CR2a shown in FIG. 5 becomes smaller.

The display control unit 14 generates a curved lane image using the first reference curvature radius adjusted based on the vehicle speed of the own vehicle X. The display control unit 14 displays the generated curved lane image on the display 50.

The first generation method and the second generation method for the curved lane image based on vehicle speed described above are examples of specific generation methods. The display control unit 14 may be configured to, at least, generate a curved lane image with a smaller degree of curvature when the vehicle speed of the own vehicle X is low compared to when the vehicle speed is high.

In the above description, a case was described in which a curved lane image to be displayed on the display 50 is generated while considering that the driver's perception of the degree of curvature varies depending on the vehicle speed of the own vehicle X. In addition, the driver's perception of the degree of curvature also varies depending on the eye height of the driver of the own vehicle X.

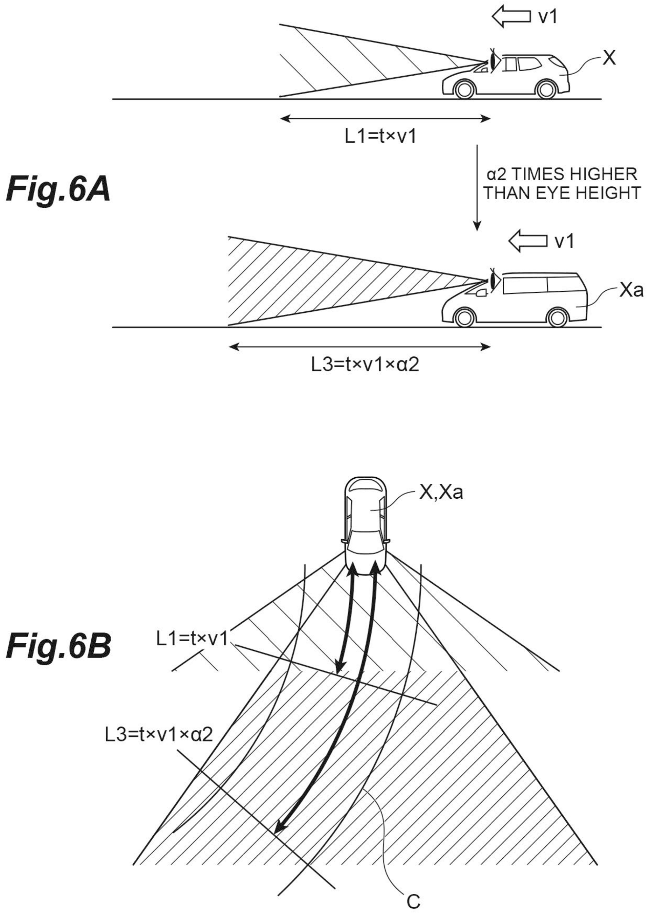

For example, the driver of the own vehicle X tends to look at the road conditions closer to the own vehicle X when the eye height is low compared to when the eye height is high. In other words, the driver tends to look farther ahead as the eye height becomes higher. For example, as shown in the upper part of FIG. 6A, when the vehicle speed of the own vehicle X is v1, the driver of the own vehicle X drives while looking at the road conditions t seconds ahead (road conditions up to t seconds ahead). In this case, the driver is looking at the situation at a distance L1 [m] (t [s] × vehicle speed v1 [m/s]) ahead. For example, the lower part of FIG. 6A shows an own vehicle Xa with a larger vehicle body than the own vehicle X in the upper part of FIG. 6A. In other words, the eye height of the driver of the own vehicle Xa in the lower part of FIG. 6A is higher than the eye height of the driver of the own vehicle X in the upper part of FIG. 6A. In this case, the driver of the own vehicle Xa in the lower part of FIG. 6B drives while looking at the situation farther ahead than the driver of the own vehicle X in the upper part of FIG. 6A.

As an example, the eye height of the driver riding in the own vehicle Xa in the lower part of FIG. 6A is assumed to be α2 times higher than the eye height of the driver riding in the own vehicle X in the upper part of FIG. 6A. Note that α2 is greater than 1. The vehicle speed of the own vehicle Xa in the lower part of FIG. 6A and the vehicle speed of the own vehicle X in the upper part of FIG. 6A are assumed to be the same vehicle speed v1. In this case, as an example, the driver riding in the own vehicle Xa in the lower part of FIG. 6A is looking at the situation at a distance L3 [m] (t [s] × vehicle speed v1 [m/s] × α2) ahead. In other words, the driver riding in the own vehicle X in the upper part of FIG. 6A is looking closer to the own vehicle X than the driver riding in the own vehicle Xa in the lower part of FIG. 6A.

Additionally, as described above, even when looking at the same curved lane, the driver tends to perceive the degree of curvature as greater when looking far ahead and as smaller when looking closer. In other words, since the position the driver looks at varies depending on the eye height, the driver's perception of the degree of curvature of the same curved lane differs depending on the eye height. For example, as shown in FIG. 6A, the own vehicles X and Xa travel on a curved lane C as shown in FIG. 6B. The driver of the own vehicle X is looking at the situation at a distance L1 closer to the own vehicle X, and thus perceives the degree of curvature of the curved lane C as smaller. On the other hand, the driver of the own vehicle Xa has a higher eye height than the driver of the own vehicle X and is looking at the situation at a distance L3 farther than the own vehicle X. Therefore, the driver of the own vehicle Xa perceives the degree of curvature of the curved lane C as greater than the driver of the own vehicle X.

Therefore, when the display control unit 14 displays a curved lane image based on the curve information acquired by the curve information acquisition unit 11, it displays the curved lane image while considering the difference in the driver's perception of the degree of curvature of the curved lane based on the eye height. Here, the display control unit 14 reduces the degree of curvature of the curved lane image displayed on the display 50 when the driver's eye height acquired by the eye height acquisition unit 13 is low compared to when the eye height is high. Additionally, the display control unit 14 causes the curvature of the curve of the curved lane image displayed on the display 50 to be proportional to the eye height, and reduces the curvature of the curve of the curved lane image as the eye height becomes lower.

For example, the display control unit 14 generates a reference curved lane image based on the curve information acquired by the curve information acquisition unit 11. Then, the display control unit 14 may adjust the degree of curvature of the curve of the generated curved lane image based on the driver's eye height. Here, the display control unit 14 adjusts the reference curved lane image so that the degree of curvature becomes smaller when the driver's eye height is low compared to when the eye height is high.

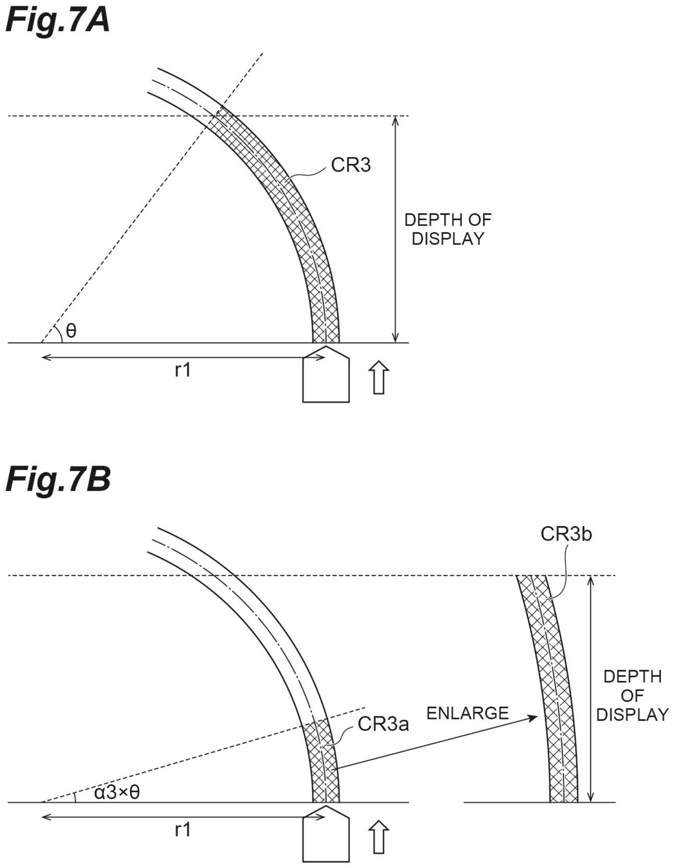

Here, an example of a method for generating a curved lane image based on the driver's eye height performed by the display control unit 14 will be described. First, a first generation method for a curved lane image based on the driver's eye height will be described. As shown in FIG. 7A, the display control unit 14 generates a second reference curve image CR3 based on the curvature of the curved lane ahead of the own vehicle X based on the curve information acquired by the curve information acquisition unit 11. The display control unit 14 increases the curvature of the second reference curve image CR3 as the curvature of the curved lane included in the curve information is greater. For example, the display control unit 14 generates the second reference curve image CR3 corresponding to the depth of the display of the curved lane image on the display 50.

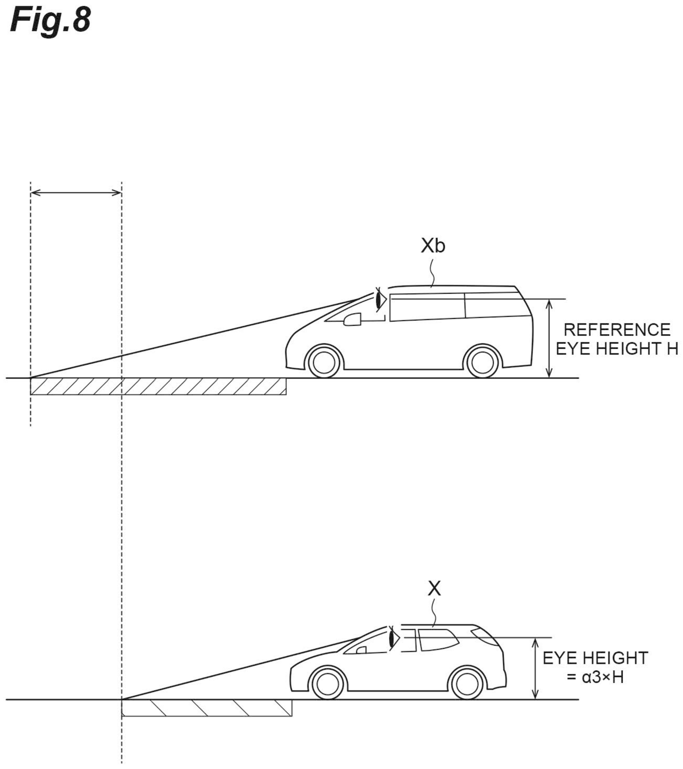

As shown in the upper part of FIG. 8, for example, the eye height of a driver riding in a reference vehicle Xb is referred to as a reference eye height H [m]. The height of the driver riding in the reference vehicle Xb is predetermined, such as being the height of a standard person. The display control unit 14 may generate, as the second reference curve image CR3, a curved lane image to be displayed on the display 50 when the reference vehicle Xb travels on the curved lane based on the curvature of the curved lane included in the curve information. Here, the display control unit 14 generates, as the second reference curve image CR3, a curved lane image when the reference vehicle Xb travels on the curved lane included in the curve information at a predetermined reference speed V [m/s]. Here, the curvature radius of the second reference curve image CR3 is denoted as r1 [m]. However, the method for generating the second reference curve image CR3 is not limited as long as it is generated based on the curvature of the curved lane included in the curve information.

Next, as shown in FIG. 7B, the display control unit 14 extracts an image corresponding to a predetermined second angular range along the curve from the generated second reference curve image CR3. The image extracted from the second reference curve image CR3 for the predetermined second angular range is referred to as a second extracted reference curve image CR3a. The display control unit 14 reduces the second angular range when the driver's eye height of the own vehicle X acquired by the eye height acquisition unit 13 is low compared to when the eye height is high.

For example, as shown in FIG. 7A, the display control unit 14 may determine the second angular range based on the angular range θ of the second reference curve image CR3 and the driver's eye height of the own vehicle X when the second reference curve image CR3 is created to correspond to the depth of the display on the display 50. Here, for example, as shown in FIG. 8, the driver's eye height of the own vehicle X is denoted as α3 × H [m]. Note that α3 is less than 1. In other words, here, as an example, a case is described in which the driver's eye height of the own vehicle X is lower than the reference eye height H of the driver of the reference vehicle Xb. As shown in FIG. 7A, when the second reference curve image CR3 is generated for the depth of the display on the display 50, the angular range along the curve is denoted as angle θ. In this case, as an example, the display control unit 14 may set the second angular range for extracting the second extracted reference curve image CR3a from the second reference curve image CR3 to α3 × θ. In other words, as the driver's eye height of the own vehicle X becomes lower, the second angular range becomes smaller, and the length of the extracted second extracted reference curve image CR3a also becomes shorter.

Next, the display control unit 14 enlarges the second extracted reference curve image CR3a extracted from the second reference curve image CR3 to a predetermined display size. Here, the display control unit 14 enlarges the second extracted reference curve image CR3a until the depth (vertical size) of the second extracted reference curve image CR3a reaches the size of the depth of the display on the display 50. Additionally, when enlarging the second extracted reference curve image CR3a, the display control unit 14 enlarges it while maintaining the aspect ratio of the image. The image obtained by enlarging the second extracted reference curve image CR3a to the predetermined display size is referred to as a second enlarged reference curve image CR3b. In other words, as the magnification factor of the second extracted reference curve image CR3a increases, the curvature radius of the second enlarged reference curve image CR3b becomes larger. In other words, as the driver's eye height of the own vehicle X becomes lower, the second angular range extracted as the second extracted reference curve image CR3a becomes smaller, and the curvature radius of the second enlarged reference curve image CR3b obtained by enlarging the extracted second extracted reference curve image CR3a becomes larger.

Next, the display control unit 14 generates a curved lane image corresponding to the vehicle speed of the own vehicle X based on the curvature (or curvature radius) of the curve of the second enlarged reference curve image CR3b obtained by enlarging the second extracted reference curve image CR3a. The display control unit 14 displays the generated curved lane image on the display 50.

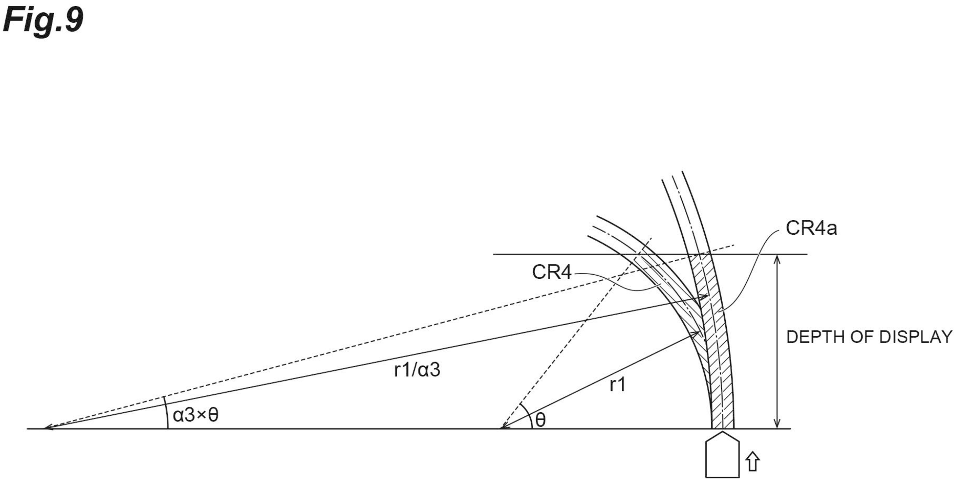

Next, a second generation method for a curved lane image based on the driver's eye height will be described. As shown in FIG. 9, the display control unit 14 acquires a second reference curvature radius r1 [m] based on the curvature of the curved lane ahead of the own vehicle X based on the curve information acquired by the curve information acquisition unit 11. The display control unit 14 reduces the second reference curvature radius r1 as the curvature of the curved lane included in the curve information is greater. For example, the display control unit 14 generates, as a curved lane image CR4, a curved lane image to be displayed on the display 50 when the reference vehicle Xb travels on the curved lane based on the curvature of the curved lane included in the curve information. Here, the display control unit 14 generates, as the curved lane image CR4, a curved lane image when the reference vehicle Xb travels on the curved lane included in the curve information at a predetermined reference speed V [m/s]. Then, the display control unit 14 may acquire the curvature radius of the generated curved lane image CR4 as the second reference curvature radius r1. In other words, the curved lane image CR4 is an image obtained based on the curve information acquired by the curve information acquisition unit 11 and is an image obtained based on the curvature of the curved lane ahead of the own vehicle X. The method for acquiring the second reference curvature radius r1 is not limited as long as it is generated based on the curvature of the curved lane included in the curve information.

The display control unit 14 adjusts the second reference curvature radius r1 to be longer when the driver's eye height of the own vehicle X acquired by the eye height acquisition unit 13 is low compared to when the eye height is high. For example, as shown in the lower part of FIG. 8, the driver's eye height of the own vehicle X is denoted as α3 × H [m]. Note that α3 is less than 1. In other words, here, as an example, a case is described in which the driver's eye height of the own vehicle X is lower than the reference eye height H [m] of the driver of the reference vehicle Xb used when acquiring the second reference curvature radius r1. In this case, as an example, the display control unit 14 may use r1/α3 [m] as the adjusted second reference curvature radius r1. In other words, as the driver's eye height of the own vehicle X becomes lower, α3 becomes smaller, and the adjusted second reference curvature radius r1/α3 [m] becomes longer. As the adjusted second reference curvature radius r1/α3 [m] becomes longer, the curvature of the curved lane image CR4a shown in FIG. 9 becomes smaller.

The display control unit 14 generates a curved lane image using the second reference curvature radius adjusted based on the driver's eye height of the own vehicle X. The display control unit 14 displays the generated curved lane image on the display 50.

The first generation method and the second generation method for the curved lane image based on the driver's eye height of the own vehicle X described above are examples of specific generation methods. The display control unit 14 may be configured to, at least, generate a curved lane image with a smaller degree of curvature when the driver's eye height of the own vehicle X is low compared to when the eye height is high.

Additionally, as described above, the display control unit 14 can adjust the degree of curvature of the curved lane image displayed on the display 50 based on the vehicle speed of the own vehicle X and the driver's eye height of the own vehicle X. For example, the display control unit 14 reduces the degree of curvature of the curved lane image displayed as the vehicle speed of the own vehicle X becomes lower and reduces the degree of curvature of the curved lane image displayed as the driver's eye height of the own vehicle X becomes lower. In this manner, the display control unit 14 adjusts the degree of curvature of the curved lane image displayed by combining the vehicle speed of the own vehicle X and the driver's eye height of the own vehicle X.

As described above, since the position the driver of the own vehicle X looks at varies depending on the vehicle speed, the driver's perception of the degree of curvature of the same curved lane differs depending on the vehicle speed. Therefore, the lane display device 100 adjusts the degree of curvature to display the curved lane image on the display 50 based on the vehicle speed. Specifically, the lane display device 100 reduces the degree of curvature of the curved lane image displayed on the display 50 when the vehicle speed is low compared to when the vehicle speed is high. This allows the lane display device 100 to display the curved lane image in accordance with the driver's perception of the degree of curvature based on the vehicle speed. Thus, the lane display device 100 can display the curved lane image while suppressing the sense of discomfort perceived by the driver.

The lane display device 100 causes the curvature of the curve of the curved lane image displayed on the display 50 to be proportional to the vehicle speed of the own vehicle X. This allows the lane display device 100 to display the curved lane image in a manner that more closely aligns with the driver's perception, even when the driver's perception of the degree of curvature varies depending on the vehicle speed.

The lane display device 100 can generate a curved lane image using the first generation method for a curved lane image based on vehicle speed. Specifically, as shown in FIG. 4A and FIG. 4B, the lane display device 100 can obtain the curvature of the curve of the curved lane image to be displayed by extracting a first extracted reference curve image CR1a for a first angular range from a first reference curve image CR1 and enlarging the extracted first extracted reference curve image CR1a. At this time, the lane display device 100 reduces the first angular range for extracting the image when the vehicle speed of the own vehicle X is low compared to when the vehicle speed is high. By reducing the first angular range, the length of the curve of the first extracted reference curve image CR1a extracted from the first reference curve image CR1 becomes shorter. By enlarging the extracted first extracted reference curve image CR1a to a predetermined display size, a first enlarged reference curve image CR1b (an image obtained by enlarging a portion of the first reference curve image CR1) with a smaller curvature is obtained as the first angular range becomes smaller. By using the curvature of the first enlarged reference curve image CR1b obtained in this manner, a curved lane image with a smaller degree of curvature is obtained as the first angular range becomes smaller (i.e., as the vehicle speed becomes lower). In other words, the lane display device 100 can reduce the degree of curvature of the curved lane image displayed on the display 50 when the vehicle speed is low compared to when the vehicle speed is high by adjusting the first angular range based on the vehicle speed as described above. Thus, the lane display device 100 can generate a curved lane image capable of suppressing the sense of discomfort perceived by the driver by using the method of enlarging the image extracted for the first angular range based on the vehicle speed.

The lane display device 100 can generate a curved lane image using the second generation method for a curved lane image based on vehicle speed. Specifically, as shown in FIG. 5, the lane display device 100 can acquire, as a first reference curvature radius r, the curvature radius of a curved lane image CR2 to be displayed on the display 50 when the own vehicle X travels at a reference speed V [m/s] based on the curvature of the curved lane ahead of the own vehicle X. The lane display device 100 can obtain the curvature radius of the curve of the curved lane image to be displayed by adjusting the first reference curvature radius based on the vehicle speed. At this time, the lane display device 100 makes the first reference curvature radius longer when the vehicle speed of the own vehicle X is low compared to when the vehicle speed is high. A curved lane image with a smaller degree of curvature is obtained as the first reference curvature radius becomes longer (i.e., as the vehicle speed becomes lower). In other words, the lane display device 100 can reduce the degree of curvature of the curved lane image displayed on the display 50 when the vehicle speed is low compared to when the vehicle speed is high by adjusting the first reference curvature radius based on the vehicle speed as described above. Thus, the lane display device 100 can generate a curved lane image capable of suppressing the sense of discomfort perceived by the driver by using the method of adjusting the curvature radius based on the vehicle speed.

Additionally, even when looking at the same curved lane, the driver's perception of the degree of curvature varies depending on the eye height. Therefore, the lane display device 100 adjusts the degree of curvature to display the curved lane image on the display 50 based on the eye height. Specifically, the lane display device 100 reduces the degree of curvature of the curved lane image displayed on the display 50 when the driver's eye height of the own vehicle X is low compared to when the eye height is high. This allows the lane display device 100 to display the curved lane image in accordance with the driver's perception of the degree of curvature based on the driver's eye height. Thus, the lane display device 100 can display the curved lane image while suppressing the sense of discomfort perceived by the driver.

The lane display device 100 causes the curvature of the curve of the curved lane image displayed on the display 50 to be proportional to the driver's eye height of the own vehicle X. This allows the lane display device 100 to display the curved lane image in a manner that more closely aligns with the driver's perception, even when the driver's perception of the degree of curvature varies depending on the eye height.

The lane display device 100 can generate a curved lane image using the first generation method for a curved lane image based on eye height. Specifically, as shown in FIG. 7A and FIG. 7B, the lane display device 100 can obtain the curvature of the curve of the curved lane image to be displayed by extracting a second extracted reference curve image CR3a (a portion of the second reference curve image) from a second reference curve image CR3 and enlarging the extracted second extracted reference curve image CR3a. At this time, the lane display device 100 reduces the second angular range for extracting the second extracted reference curve image CR3a when the driver's eye height is low compared to when the eye height is high. By reducing the second angular range, the length of the curve of the extracted second extracted reference curve image CR3a becomes shorter. By enlarging the extracted second extracted reference curve image CR3a to a predetermined display size, a second enlarged reference curve image CR3b (an image obtained by enlarging a portion of the second reference curve image CR3) with a smaller curvature is obtained as the second angular range becomes smaller. By using the curvature of the second enlarged reference curve image CR3b obtained in this manner, a curved lane image with a smaller degree of curvature is obtained as the second angular range becomes smaller (i.e., as the vehicle speed becomes lower). In other words, the lane display device 100 can reduce the degree of curvature of the curved lane image displayed on the display 50 when the eye height is low compared to when the eye height is high by adjusting the second angular range based on the driver's eye height as described above. Thus, the lane display device 100 can generate a curved lane image capable of suppressing the sense of discomfort perceived by the driver by using the method of enlarging the image extracted for the second angular range based on the eye height.

The lane display device 100 can generate a curved lane image using the second generation method for a curved lane image based on the driver's eye height. Specifically, as shown in FIG. 9, the lane display device 100 generates, as a curved lane image CR4, a curved lane image to be displayed on the display 50 when the reference vehicle Xb travels on the curved lane based on the curvature of the curved lane ahead of the own vehicle X. The lane display device 100 can acquire the curvature radius of the generated curved lane image CR4 as a second reference curvature radius r1. The lane display device 100 can obtain the curvature radius of the curve of the curved lane image to be displayed by adjusting the second reference curvature radius based on the driver's eye height of the own vehicle X. At this time, the lane display device 100 makes the second reference curvature radius longer when the driver's eye height of the own vehicle X is low compared to when the eye height is high. A curved lane image with a smaller degree of curvature is obtained as the second reference curvature radius becomes longer (i.e., as the eye height becomes lower). In other words, the lane display device 100 can reduce the degree of curvature of the curved lane image displayed on the display 50 when the eye height is low compared to when the eye height is high by adjusting the second reference curvature radius based on the driver's eye height as described above. Thus, the lane display device 100 can generate a curved lane image capable of suppressing the sense of discomfort perceived by the driver by using the method of adjusting the curvature radius based on the driver's eye height.

Although the embodiments of the present disclosure have been described above, the present disclosure is not limited to the above embodiments. For example, the display control unit 14 adjusted the degree of curvature of the curved lane image displayed on the display 50 based on the vehicle speed of the own vehicle X and the driver's eye height of the own vehicle X. However, the display control unit 14 is not limited to this and may be configured to adjust the degree of curvature of the curved lane image based on either the vehicle speed of the own vehicle X or the driver's eye height of the own vehicle X.

## Claims

1. A lane display device (100) comprising:
a curve information acquisition unit (11) configured to acquire curve information including a shape of a curved lane (C) around an own vehicle (X);
a display control unit (14) configured to, based on the acquired curve information, display a curved lane image (CA) corresponding to the shape of the curved lane (C) around the own vehicle (X) on a display (50); and
a vehicle speed acquisition unit (12) configured to acquire a vehicle speed of the own vehicle (X),
wherein the display control unit (14) is configured to reduce a degree of curvature of the curved lane image (CA) displayed on the display (50) when the vehicle speed is low compared to when the vehicle speed is high.

2. The lane display device (100) according to claim 1, wherein the display control unit (14) is configured to cause a curvature of a curve of the curved lane image (CA) displayed on the display (50) to be proportional to the vehicle speed, and reduce the curvature of the curve of the curved lane image (CA) as the vehicle speed becomes lower.

3. The lane display device (100) according to claim 1 or 2, wherein the display control unit (14) is configured to:
generate a first reference curve image (CR1) based on a curvature of the curved lane (C) around the own vehicle (X) based on the acquired curve information,
extract an image (CR1a) corresponding to a predetermined first angular range along the curve from the generated first reference curve image (CR1),
enlarge the extracted first reference curve image (CR1a) to a predetermined display size,
generate the curved lane image (CA) based on a curvature of the curve of the enlarged first reference curve image (CR1b),
display the generated curved lane image (CA) on the display (50), and
reduce the first angular range when the vehicle speed is low compared to when the vehicle speed is high.

4. The lane display device (100) according to claim 1 or 2, wherein the display control unit (14) is configured to:
acquire a first reference curvature radius (r) based on a curvature of the curved lane (C) around the own vehicle (X) based on the acquired curve information,
adjust the first reference curvature radius (r) to be longer when the vehicle speed is low compared to when the vehicle speed is high,
generate the curved lane image (CA) based on the adjusted first reference curvature radius (r), and
display the generated curved lane image (CA) on the display (50).

5. The lane display device (100) according to any one of claims 1 to 4, further comprising an eye height acquisition unit (13) configured to acquire an eye height of a driver of the own vehicle (X),
wherein the display control unit (14) is configured to reduce the degree of curvature of the curved lane image (CA) displayed on the display (50) when the acquired driver's eye height is low compared to when the eye height is high.

6. The lane display device (100) according to claim 5, wherein the display control unit (14) is configured to cause a curvature of the curve of the curved lane image (CA) displayed on the display (50) to be proportional to the driver's eye height, and reduce the curvature of the curve of the curved lane image (CA) as the eye height becomes lower.

7. The lane display device (100) according to claim 5 or 6, wherein the display control unit (14) is configured to:
generate a second reference curve image (CR3) based on a curvature of the curved lane (C) around the own vehicle (X) based on the acquired curve information,
extract an image (CR3a) corresponding to a predetermined second angular range along the curve from the generated second reference curve image (CR3),
enlarge the extracted second reference curve image (CR3a) to a predetermined display size,
generate the curved lane image (CA) based on a curvature of the curve of the enlarged second reference curve image (CR3b),
display the generated curved lane image (CA) on the display (50), and
reduce the second angular range when the driver's eye height is low compared to when the eye height is high.

8. The lane display device (100) according to claim 5 or 6, wherein the display control unit (14) is configured to:
acquire a second reference curvature radius (r1) based on a curvature of the curved lane (C) around the own vehicle (X) based on the acquired curve information,
adjust the second reference curvature radius (r1) to be longer when the driver's eye height is low compared to when the eye height is high,
generate the curved lane image (CA) based on the adjusted second reference curvature radius (r1), and
display the generated curved lane image (CA) on the display (50).
